# EUROPEAN PATENT SPECIFICATION

(11) **EP 2 237 104 B1**
(45) Date of publication and mention of the grant of the patent: **12.06.2013**
(21) Application number: 08871947.1
(22) Date of filing: 26.09.2008
(51) Int. Cl.: G02F 1/1362, G02F 1/1343, G02F 1/133

(54) **DISPLAY DEVICE AND ACTIVE MATRIX SUBSTRATE**
ANZEIGEVORRICHTUNG UND AKTIVMATRIXSUBSTRAT
DISPOSITIF D'AFFICHAGE ET SUBSTRAT À MATRICE ACTIVE

(30) Priority: 31.01.2008 JP 2008022044
(43) Date of publication of application: 06.10.2010
(73) Proprietor: Sharp Kabushiki Kaisha, Osaka-shi, Osaka 545-8522 (JP)
(72) Inventor: YOSHIDA, Keisuke, Osaka-shi Osaka 545-8522 (JP); MAEDA, Kazuhiro, Osaka-shi Osaka 545-8522 (JP); YAYOTANI, Ryohji, Osaka-shi Osaka 545-8522 (JP); FUJIWARA, Masahiro, Osaka-shi Osaka 545-8522 (JP)
(74) Representative: Goddar, Heinz J.
(86) International application number: PCT/JP2008/067512
(87) International publication number: WO 2009/096063

(56) References cited:
- EP-A2- 1 939 675
- WO-A1-2006/118066
- JP-A- 2006 003 857
- US-B1- 6 236 063

## Description

### Technical Field

The present invention relates to a display device including a display panel in which a light sensor is provided in each pixel.

### Background Art

Conventionally, a display device including a display panel in which a light sensor is provided in each pixel has been proposed.

In the display device, a photodiode is generally used as the light sensor. A sensitivity of the photodiode is generally indicated by S (signal) / N (noise) ratio. That is, if the S/N ratio is large, it means the photodiode is sensitive.

For improvement in the sensitivity of the light sensor in the display panel having the light sensor in each pixel, Patent Literature 1, for example, discloses a technique in which two photodiodes are provided in one pixel to increase a photocurrent thereby to improve the S (signal) / N (noise) ratio. That is, in the technique disclosed in Patent JP 2006-3857 A (published January 5, 2006), the photocurrent that contributes to S (signal) of the S/N ratio indicating the sensitivity of the photodiode is increased to improve the sensitivity.

EP 1 939 675 A2, which is prior art under Article 54(3) EPC, discloses a liquid crystal device that includes a first scan line; a second scan line arranged in parallel with the first scan line; a signal line arranged to intersect with the first scan line; a pixel arranged in a matrix with respect to an intersection between the first scan line and the signal line. The pixel includes a first transistor having a gate coupled to the first scan line, a source, and a drain, one of the source and the drain being coupled to the signal line; a pixel electrode coupled to the other of the source and the drain of the first transistor; a common electrode disposed facing to the pixel electrode; a liquid crystal layer disposed between the pixel electrode and the common electrode; a second transistor having a gate coupled to the second scan line, a source, and a drain, one of the source and the drain being coupled to the other of the source and the drain of the first transistor, and the other of the source and the drain being coupled to a power source line; and a first light-shielding film covering one side of the first transistor and the second transistor.

US 6,236,063 B1 provides a semiconductor device including a picture display function and a picture capturing function on the same substrate. The semiconductor device includes a pixel matrix, an image sensor, and a peripheral circuit for driving those, which are provided on the same substrate. Moreover, in the semiconductor device, the structure/manufacturing process of the image sensor is made coincident with the structure/manufacturing process of the pixel matrix and the peripheral driver circuit, so that the semiconductor device can be manufactured at low cost.

### Summary of Invention

Photodiodes used as light sensors in a display device, are subject to noise (electric noise) caused by variation in electric potentials in pixel electrodes within pixels. This provides a greater value of N (noise), which is a denominator in the S/N ratio indicating sensitivity of the photodiodes. Hence, this leads to deterioration of the sensitivity.

For example, in JP 2006-3857 A, in order to improve the sensitivity of the photodiodes, two photodiodes are provided in one pixel to increase a photocurrent (S). However, as the number of the photodiodes increases, an amount of noise (N) to receive increases, too. As a result, the sensitivity of the light sensors decreases.

The present invention is made in view of the problem, and an object of the present invention is to achieve a display device in which an effect of electric noise on light sensors can be reduced for avoiding deterioration of sensitivity of the light sensors.

The object is solved by the subject matter of the independent claims. Advantageous embodiments are subject to the dependent claims. A display device of the present invention, in order to attain the object, includes a display panel in which a light sensor is provided in each pixel, has transparent electrodes which cover the light sensors provided, and the transparent electrodes are electrically insulated from pixel electrodes in pixels, and are formed on the same layer of the active matrix substrate as the pixel electrodes.

According to the structure, the light sensors are covered with the transparent electrodes, and the transparent electrodes are electrically insulated from the pixel electrodes. Therefore, the light sensors are not covered with the pixel electrodes, meanwhile the light sensors are shielded from electric noise caused by variation in electric potentials in the pixel electrodes. Thereby, the electric noise caused by the pixel electrodes will not affect the light sensors. Accordingly, deterioration of sensitivity of the light sensors is preventable. As a result, the light sensors can be improved to have a greater sensitivity than a conventional light sensor built-in display panel.

Accordingly, in a case of applying the display device of the present invention to a light sensor touch panel built-in liquid crystal display device, the greater sensitivity of the light sensors provides a greater perception to a touch panel operation of a user, thereby causing an improvement in operability of the touch panel.

It is preferable that the transparent electrodes which cover the individual light sensors are electrically connected with each other.

Other signals and external noise other than the electric noise caused by the pixel electrodes have an effect on the light sensors. To deal with this problem, an electric connection between the transparent electrodes disperses the effect of the other signals and the external noise. Therefore, the light sensors become less susceptible to the other signals and the external noise.

Further, it is preferable that a predetermined electric potential is applied on the transparent electrodes.

The predetermined electric potential is applied on the transparent electrodes so as to prevent variation in electric potentials caused by the other signals and the external noise which are given to the transparent electrodes themselves. Further, this reduces the effect of the electric noise more surely. That is, in the case, the transparent electrodes which cover the light sensors function as shield electrodes for preventing the noise from entering the light sensors.

It is preferable that the transparent electrodes are narrower in width at connected portions thereof than the other portions thereof than the connected portions.

In the case, the connected portions of the transparent electrodes generally have wirings for driving pixel electrodes provided. Therefore, if surface areas of the transparent electrodes of the connected portions are large, parasitic capacitance of the transparent electrodes and the wirings increases. Accordingly, it is preferable that the surface areas of the transparent electrodes of the connected portions are as small as possible. Consequently, as described above, the transparent electrodes are narrower in width at the connected portions thereof than the other portions thereof than the connected portions. This can reduces the parasitic capacitance.

Further, when the display device is a liquid crystal display device having a vertical liquid crystal mode with an axisymmetric alignment, the above configuration in which the widths of the connected portions of the transparent electrodes are narrow makes shapes of the electrodes rectangular as with display sections.

Thereby, liquid crystal molecules on the transparent electrodes are aligned axisymmetrically as liquid crystal molecules on the display sections. This stabilizes alignment states of the liquid crystal molecules, thereby improving a display quality.

Meanwhile, when the transparent electrodes do not have a socalled constriction structure in which, as described above, the widths of the connected portions of the transparent electrodes are narrow, the alignment of the liquid crystal molecules are not adjusted per pixels, and the alignment states of the liquid crystal molecules are different per pixels, thereby causing rough reflection display. Further, the unstable alignment of the liquid crystal molecules would spread to a transparent area. That would possibly cause rough transparent display.

It is preferable that the display panel includes a substrate and a counter substrate wherein the substrate has the pixel electrodes on one side and the counter substrate has counter electrodes on one side thereof that faces the one side of the substrate on which the pixel electrodes are provided, and when the counter electrodes of the counter substrate are driven by AC, the electric potentials applied on the transparent electrodes are set at an intermediate values of electric potentials of the counter electrodes.

As described above, it is configured that the counter electrodes of the counter substrate are driven by AC and the electric potentials of the transparent electrodes are set at the intermediate values of the electric potentials of the counter electrodes. For example, in a case that a display device is a liquid crystal display device, this configuration makes it possible that positive and negative polarities of electric fields to be applied on liquid crystals on the transparent electrodes are same in magnitude so that a stable display quality is obtained without causing flicker.

It is preferable that the display panel includes the substrate and the counter substrate wherein the substrate has the pixel electrodes on one side and the counter substrate has the counter electrodes on one side thereof that feces the one side of the substrate on which the pixel electrodes are provided, and when the counter electrodes of the counter substrate are driven by DC, the electric potentials applied on the transparent electrodes are set at the same as those of the counter electrodes.

As described above, it is configured that the counter electrodes of the counter substrate are driven by DC and the electric potentials applied on the transparent electrodes are set at the same as those of the counter electrodes. For example, in a case that a display device is a liquid crystal display device of a normally black, this configuration makes it possible that a direct current component is not applied onto liquid crystals on the transparent electrodes so that the liquid crystals on the transparent electrodes are oriented into a black display state. Accordingly, a good display quality is obtained without deterioration of contrast.

Further, because the direct current component is not applied onto the liquid crystals on the transparent electrodes, it becomes possible to avoid problems such as spots caused by an ionic impurity.

According to the invention, the transparent electrodes are formed on a same layer as the pixel electrodes.

In the case, the transparent electrodes and the pixel electrodes are produced in a same step. That is, the transparent electrodes and the pixel electrodes may be produced by patterning a transparent electrode layer into patterns as designed.

Accordingly, a method for producing a display device can be simplified.

It is preferable that light shields for shielding light in marginal parts of light-sensitive portions of the light sensors are formed.

The liquid crystals on the transparent electrodes do not contribute to display, and further leak of light also occurs depending on a setting of a voltage to cause deterioration of a display quality. However, the light shields for shielding light in the marginal parts of the light-sensitive portions of the light sensors are formed. Because of this, leak of light from areas which do not contribute to display can be reduced as much as possible. That improves a display quality, that is, contrast.

Further, in order to make the leak of light reduced, it is preferable that the light shields are provided as below.

That is to say, it is preferable that the light shields are provided on the transparent electrodes.

Furthermore, it is preferable that the light shields are provided on the counter substrate facing the substrate on which the pixel electrodes are formed.

It is preferable that counter electrodes are formed on the counter substrate facing the substrate on which the pixel electrodes are formed, in places other than places facing the transparent electrodes.

Accordingly, for example, when a display device is a liquid crystal display device, a voltage is not applied on the liquid crystals on the transparent electrodes, whereby deterioration of a display quality is prevented. Particularly, even in a case that a polarity of the voltage applied on the liquid crystals constantly inverts, such as the case that the counter electrodes of the counter substrate are driven by AC, flicker caused by variation in electric field of the liquid crystals is prevented without an effect on display, because the voltage is not applied to the liquid crystals on the transparent electrodes.

A display device of the present invention is a semi-transparent display device including a transparent section and a reflecting section in each pixel, and in which device a cell thickness control is performed with transparent resists in the transparent section and the reflecting section on a counter substrate facing a substrate on which pixel electrodes are formed, comprises a light sensor within each pixel and transparent electrodes which cover the light sensors, the transparent electrodes being electrically insulated from the pixel electrodes provided respectively within the pixels, and the transparent resists for the cell thickness control being provided respectively at positions corresponding to the transparent electrodes of the counter substrate.

According to the structure, in the semi-transparent display device, the light sensors are covered with the transparent electrodes, and the transparent electrodes are electrically insulated from the pixel electrodes. Therefore, the light sensors are not covered with the pixel electrodes, meanwhile the light sensors are shielded from electric noise caused by variation in electric potentials in the pixel electrodes. Thereby, the electric noise caused by the pixel electrodes will not affect the light sensors. Consequently, deterioration of sensitivity of the light sensors can be avoided. As a result, the light sensors can be improved to have a greater sensitivity than a conventional light sensor built-in display panel.

Accordingly, in a case of applying the display device of the present invention to a light sensor touch panel built-in liquid crystal display device, the greater sensitivity of the light sensors provides a greater perception to a touch panel operation of a user, thereby causing an improvement in operability of the touch panel.

There is a case in which color filter layers are not formed at positions corresponding to the light sensors on the counter substrate in order to improve the sensitivity of the light sensors. However, in the case, the color filter layers produce step portions. As a result, leak of light may be caused in the step portions, or the counter electrodes would be thin or broken at the step portions. However, the foregoing problem is solved by covering the step portions with the transparent resists which control a cell thickness in the reflecting sections. Further, thickness of liquid crystal sections on the transparent electrodes are the same as that of the reflecting sections. This enables controlling display of the liquid crystals on the reflecting sections and on the transparent electrodes in the same way.

### Brief Description of Drawings

Fig. 1

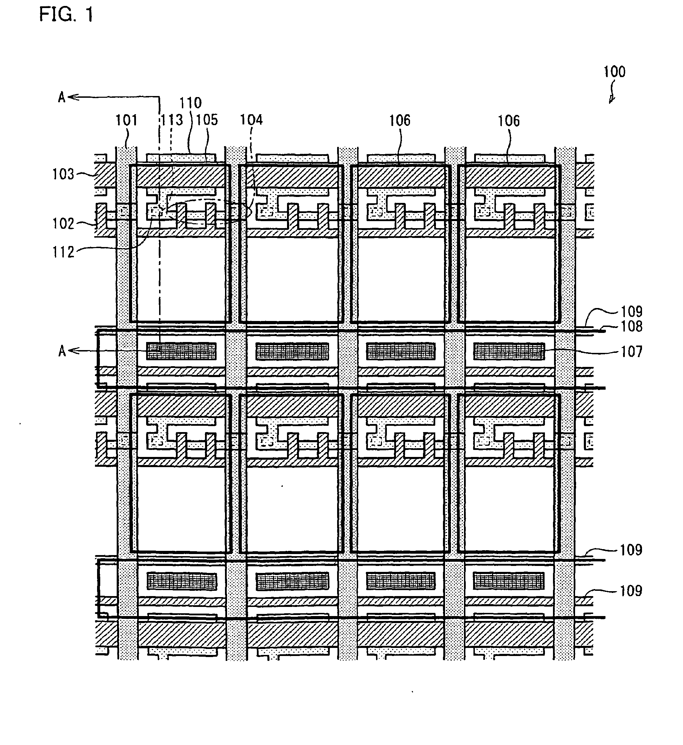

   Fig. 1 is a plain view of a liquid crystal display device of an embodiment of the present invention.
Fig. 2

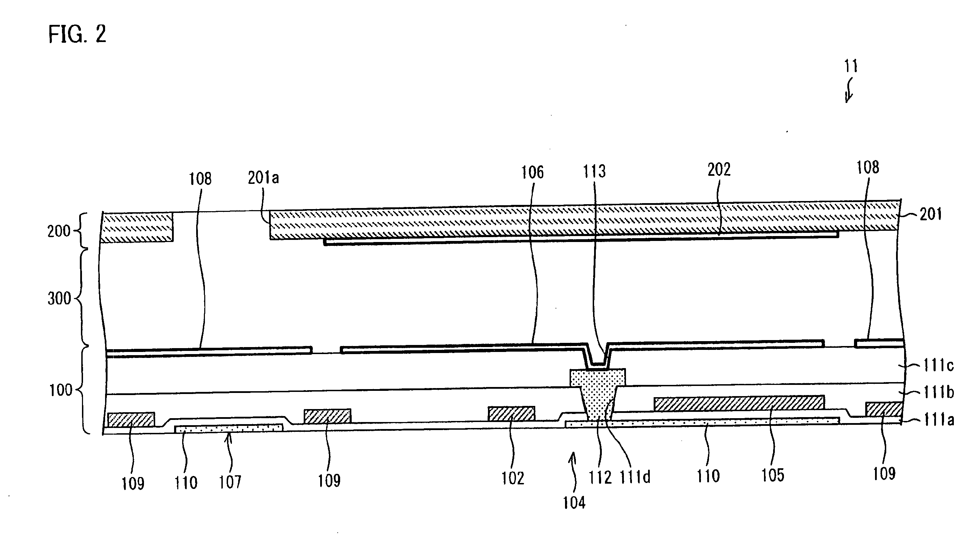

   Fig. 2 is a schematic cross-sectional view of the liquid crystal display device shown in Fig. 1.
Fig. 3

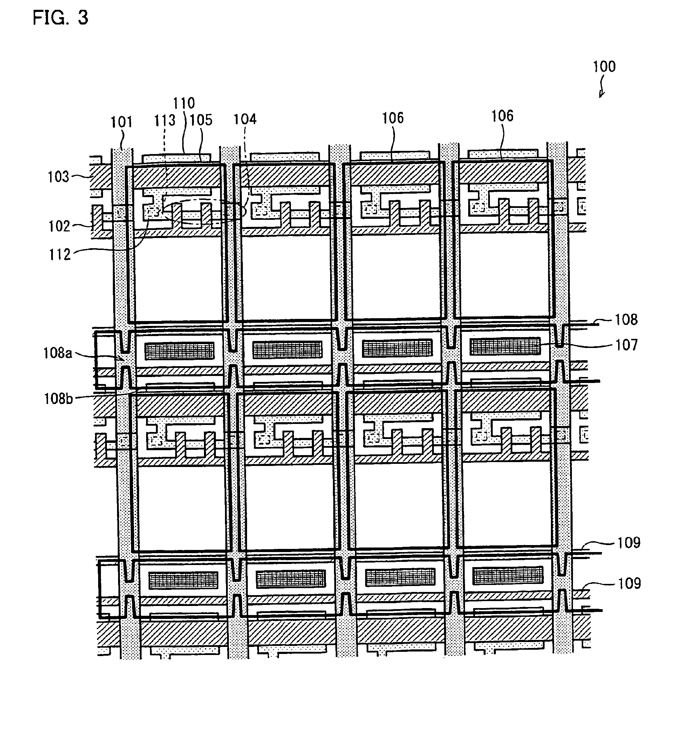

   Fig. 3 is a plain view of a liquid crystal display device of another embodiment of the present invention.
Fig. 4

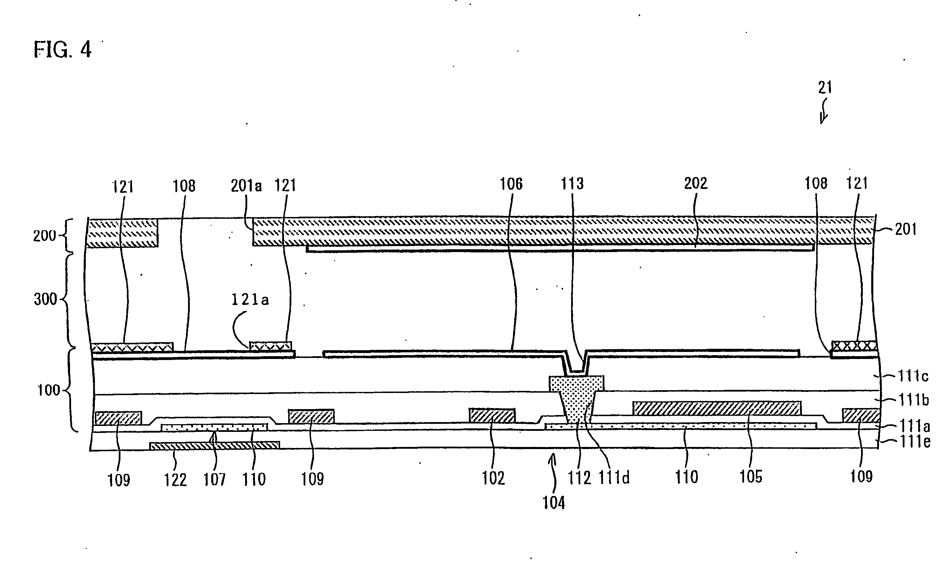

   Fig. 4 is a schematic cross-sectional view of a liquid crystal display device of another embodiment of the present invention.
Fig. 5

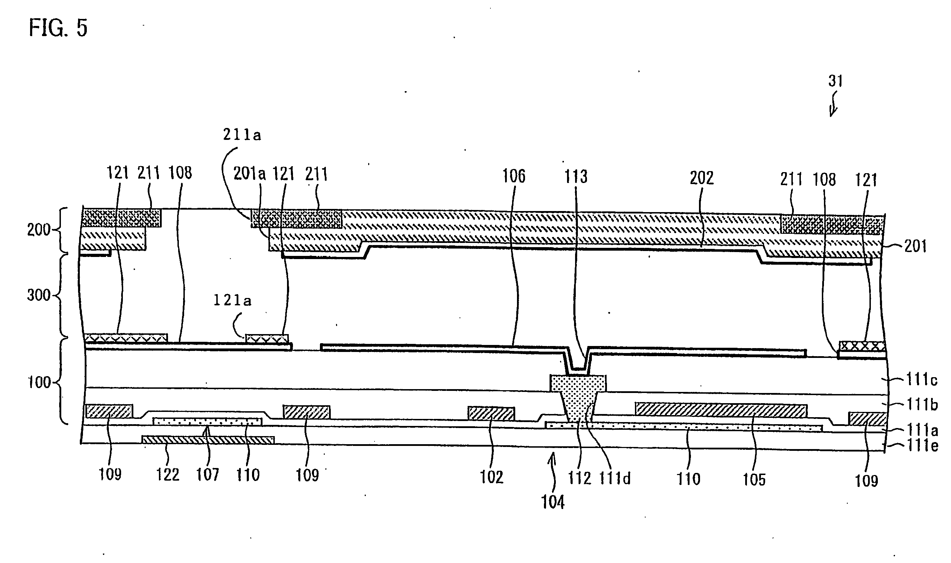

   Fig. 5 is a schematic cross-sectional view of a liquid crystal display device of another embodiment of the present invention.
Fig. 6

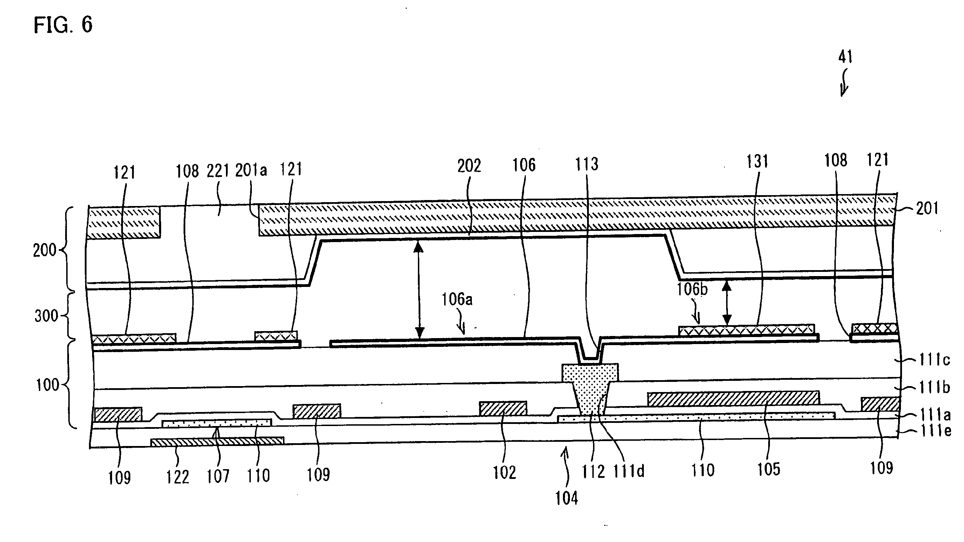

   Fig. 6 is a schematic cross-sectional view of a liquid crystal display device of another embodiment of the present invention.
Fig. 7

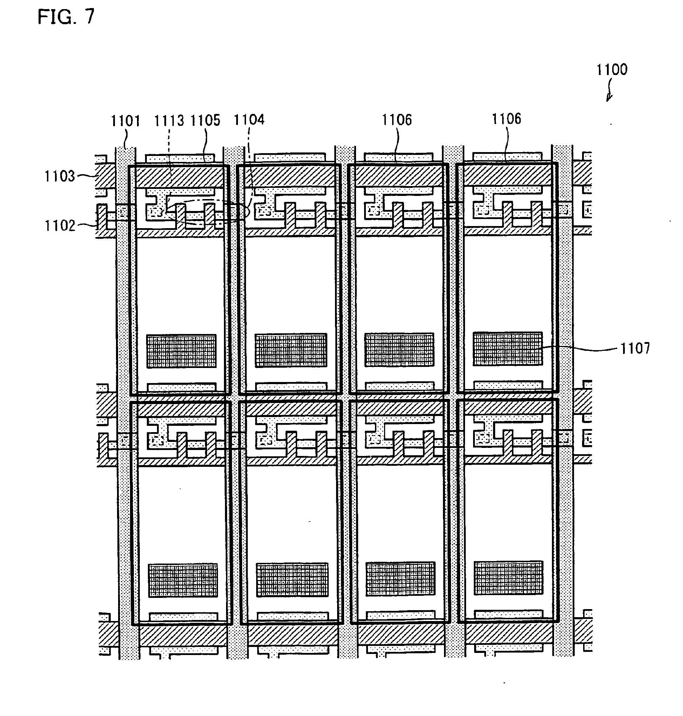

   Fig. 7 is a plain view showing a comparative example of a liquid crystal display device of the present invention.

### Description of Embodiments

The following describes an embodiment of the present invention. Note that, the present embodiment describes an example in which a display device of the present invention is applied to a light sensor touch panel built-in liquid crystal display device.

The following describes a gross structure of a liquid crystal display device of the present embodiment in reference to Fig. 1 and Fig. 2.

Fig. 1 is a plain view of a liquid crystal display device of the present embodiment. Note that, in Fig. 1, for convenience in description, only a side of an active matrix substrate (hereinafter referred to as a TFT (Thin Film Transistor) array substrate) is described, and a liquid crystal and a counter substrate are not shown.

Fig. 2 is a cross-sectional view taken along line A - A of the liquid crystal display device shown in Fig. 1. Note that Fig. 2 shows not only the TFT array substrate but also the liquid crystal and the counter substrate. That is to say, as shown in Fig.2, a liquid crystal display device 11 of the present embodiment includes a liquid crystal layer 300 between a TFT array substrate 100 and a counter substrate 200 opposite to the TFT array substrate 100.

Firstly, the TFT array substrate 100 is described.

As shown in Fig. 1, the TFT array substrate 100 includes pixel electrodes 106 and photo sensor elements 107.

The pixel electrodes 106 and the photo sensor elements 107 are arranged on an insulating substrate (not shown) in a matrix form. A pixel comprises a pixel electrode 106 and a photo sensor element 107. That is, in the TFT array substrate 100, one pixel includes a photo sensor element 107 in addition to a pixel electrode 106.

The pixel electrodes 106 are electrically connected to drain electrodes 112 of TFTs 104 formed in intersections of source bus lines 101 and gate bus lines 102 which intersect with the source bus lines 101 via contact holes 113.

The drain electrodes 112 are electrically connected to silicon layers 110.

CS bus lines 103 and photo sensor wirings 109 are substantially parallel to the gate bus lines 102.

The CS bus lines 103 form CS electrodes 105 per pixels, and the CS electrodes 10 and the silicon layers 110 make auxiliary capacitance.

The photo sensor wirings 109 transmit signals for controlling sensing circuits which include the pixel electrodes 106 formed along the gate bus lines 102, the photo sensor elements 107 formed between the pixel electrodes 106 and the TFTs connected to the photo sensor elements 107.

The photo sensor elements 107 are photoelectric transducers which receive light and convert the received light into an electric current. For example, the elements 107 are made of photodiode, and supply the photo sensor wirings 109 with an electric current in accordance with an amount of the received light. Therefore, it is possible to detect the amount of the received light per pixels.

Transparent shield electrodes 108 comprising transparent electrodes are formed above the photo sensor elements 107. The transparent shield electrodes 108 prevent an effect of noise, on the photo sensor elements 107, caused by variation in electric potentials in the pixel electrodes 106.

The transparent shield electrodes 108 comprise the transparent electrodes formed integrally along the photo sensor wirings 109 so as to cover adjacent photo sensor elements 107. The transparent shield electrodes 108 are connected to a power source (not shown), and a predetermined electric potential is constantly applied to the electrodes 108.

The TFT array substrate 100 of the structure, as shown in Fig. 2, has the pixel electrodes 106 and the transparent shield electrodes 108 formed on a surface connected to the liquid crystal layer 300. Therefore, the pixel electrodes 106 and the transparent shield electrodes 108 are obtained by patterning one layer, that is, a transparent electrode layer. In the case, the pixel electrodes 106 and the transparent shield electrodes 108 are produced in the same process, thereby allowing simplification of a manufacturing step.

In addition, in view of the simplification of the manufacturing step, as described above, it is preferable to form the pixel electrodes 106 and the transparent shield electrodes 108 on one layer.

The TFT array substrate 100 has a first insulating film 111a laminated, and has the wirings (the gate bus lines 102 and the photo sensor wirings 109) and CS electrodes 105 formed on the first insulating film 111a so as to cover silicon layers 110 patterned on an insulating substrate (not shown) in a bottom layer opposite to sides where the pixel electrodes 106 and the transparent shield electrodes 108 are formed. Further, a second insulating film 111b is laminated so as to cover the wirings and the CS electrodes 105.

The drain electrodes 112 comprising the TFTs 104 are formed on the second insulating film 111b. The drain electrodes 112 are electrically connected to the silicon layers 110 which exist right under the pixel electrodes 106 via contact holes 111d formed in the first insulating film 111a and the second insulating film 111b.

Further, a third insulating film 111c is laminated on the second insulating film 111b so as to cover the drain electrodes 112.

The pixel electrodes 106 and the transparent shield electrodes 108 are formed on the third insulating film 111c. The pixel electrodes 106 are electrically connected to the drain electrodes 112 via contact holes 113 formed in the third insulating film 111c.

Next, a counter substrate 200 is described.

As shown in Fig. 2, the counter substrate 200 has a transparent insulating substrate (not shown) arranged on a top surface of the substrate 200, and has color filter layers 201 formed on the insulating substrate. The color filter layers 201 are configured by RGB so as to correspond to pixels of the TFT array substrate 100.

Further, the color filter layers 201 have openings 201a formed in portions corresponding to the photo sensor elements 107 of the TFT array substrate 100.

Furthermore, counter electrodes 202 are formed in positions opposite to the pixel electrodes 106 of the TFT array substrate 100, on a side of the liquid crystal layer 300 of the color filter layers 201.

In addition, though not shown in Fig. 1, the counter substrate 200 has an alignment film for controlling an alignment of a liquid crystal formed on the counter electrodes 202 on the side of the liquid crystal layer 300, and the alignment films for controlling the alignment of the liquid crystal are also formed on the pixel electrodes 106 and the transparent shield electrodes 108 of the TFT array substrate 100.

A liquid crystal having a vertical alignment such as a CPA alignment may be used in view of field angle and contrast, as a liquid crystal used for the liquid crystal layer 300. However, because the alignment of liquid crystal molecules on the transparent shield electrodes 108 are not controlled, alignment states of the liquid crystal molecules per pixels differ, thereby causing reflecting display to look rough. Further, such unevenness of the alignments of the liquid crystal molecules extends to liquid crystal molecules on the pixel electrodes 106, thereby causing deterioration of transparent display.

There, as a method for controlling alignment unevenness of the liquid crystal molecules on the transparent shield electrodes 108 while maintaining a shield function in the transparent shield electrodes 108, for example as shown in Fig. 3, it is considered that widths of areas 108a where the transparent shield electrodes 108 intersect with the source bus lines 101 are made narrower than those of areas 108b which cover the photo sensor elements 107.

As shown in Fig. 3, the widths of the transparent shield electrodes 108 are partially made narrow, that is, made in a constricted shape. That makes the transparent shield electrodes 108 above the photo sensor elements 107 rectangular, makes the liquid crystal molecules arranged in an axisymmetrical alignment on the rectangular transparent shield electrodes 108, and makes the alignments of the liquid crystal molecules adjusted evenly in all pixels. As a result, this eliminates reflective roughness caused by alignment deterioration on the transparent shield electrodes 108, and further, this eliminates an effect of alignment unevenness of the liquid crystal molecules on the pixel electrodes 106 caused by the alignment unevenness of the liquid crystal molecules on the transparent shield electrodes 108. Therefore, deterioration of a liquid crystal display quality is prevented.

In addition, intersections of the transparent shield electrodes 108 and the source bus lines 101 have a large amount of auxiliary capacitance, and variation in electric potentials of the source bus lines 101 causes variation in electric potentials of the transparent shield electrodes 108, thereby causing noise. However, as shown in Fig. 3, portions of the transparent shield electrodes 108 which portions intersect with the source bus lines 101 are made in a constricted shape, which makes areas of the intersections small, thereby causing the auxiliary capacitance to be reduced. This reduces an effect which the variation in electric potentials of the source bus lines 101 has on the transparent shield electrodes 108, which makes it difficult for the electric potentials of the transparent shield electrodes 108 to change.

It is preferable that the widths of the transparent shield electrodes 108 in the constricted portion are 10µm or less.

In the case of using the liquid crystal having the vertical direction, as described above, the transparent shield electrodes 108 are made in a rectangular form. That makes it possible to fix the alignments of the liquid crystal molecules. In order to make the electrodes 108 more rectangular, the widths of the constricted portions are made narrower.

Fig. 7 is a view showing a comparative example of a liquid crystal display device 11 of the present invention.

A liquid crystal display device 1100 shown in Fig. 7 has the same structure as the liquid crystal display device 11 shown in Fig. 1, other than a structure in which photo sensor elements 1107 within pixels are covered with pixel electrodes 1106 which are transparent electrodes. Note that reference signs are changed in the thousands, however a function thereof is the same as the device 11 of Fig. 1. For example, source bus lines 1101 correspond to source bus lines 101, gate bus lines 1102 correspond to gate bus lines 102, CS bus lines 1103 correspond to CS bus lines 103, TFTs 1104 correspond to TFTs 104, CS electrodes 1105 correspond to CS electrodes 105, pixel electrodes 1106 correspond to pixel electrodes 106, and photo sensor elements 1107 correspond to photo sensor elements 107.

As shown in Fig. 7, when the photo sensor elements 1107 within pixels are covered with the pixel electrodes 1106 which are the transparent electrodes, the photo sensor elements 1107 are subject to noise caused by variation in electric potentials of the pixel electrodes 1106. Therefore, a N (noise) component of S/N which indicate sensitivity of the photo sensor elements 1107 increases, thereby causing deterioration of the sensitivity of the photo sensor elements 1107.

However, as shown in Fig. 1, the liquid crystal display device 11 of the present embodiment has the transparent shield electrodes 108 formed to be electrically insulated from the pixel electrodes 106 above the photo sensor elements 107 in the TFT array substrate 100. Therefore, variation in electric potentials of the pixel electrodes 106 is not conducted to the photo sensor elements 107 through the transparent shield electrodes 108. That is, the photo sensor elements 107 are not subject to noise caused by the variation in electric potentials of the pixel electrodes 106.

Moreover, the transparent shield electrodes 108 comprise transparent electrodes integrally formed so as to cover all adjacent photo sensor elements 107, and a predetermined electric potential is applied to the transparent electrodes. That surely prevents an effect of noise caused by the variation in electric potentials of the pixel electrodes 106.

Next, the following describes a liquid crystal display device in view of contrast, in a liquid crystal display device including transparent shield electrodes 108.

Fig. 4 is a schematic cross-sectional view of a liquid crystal display device 21 of another embodiment of the present invention. Note that the liquid crystal display device 21 has a substantially identical structure with the liquid crystal display device 11 shown in Fig. 1, however, differs in that light shields are provided in the vicinities of photo sensor elements 107.

That is to say, as shown in Fig. 4, the liquid crystal display device 21 has light shields 121 formed on transparent shield electrodes 108 of a TFT array substrate 100. The light shields 121 have openings 121a of which opening widths are smaller than opening widths of openings 201a in color filter layers 201 of a counter substrate 200 and larger than widths of light-sensitive portions of the photo sensor elements 107. Therefore, light irradiated from a backlight (not shown) shields partial light which passes through the transparent shield electrodes 108.

Further, in the liquid crystal display device 21 shown in Fig. 4, the TFT array substrate 100 has lower light shields 122 formed right under silicon layers 110 comprising the photo sensor elements 107. A fourth insulating film 111e is provided between the lower light shields 122 and the silicon layers 110.

The lower light shields 122 are larger in size than the silicon layers 110 comprising the photo sensor elements 107, and are formed in such a size that does not influence on pixel electrodes 106.

The lower light shields 122 prevent the light irradiated from the backlight (not shown) from extending to the photo sensor elements 107. Simultaneous usage of the lower light shields 122 and the light shields 121 on the transparent shield electrodes 108 prevents the light irradiated from the backlight (not shown) from passing through the transparent shield electrodes 108.

As described above, the liquid crystal display device 21 shown in Fig. 4 prevents leak of light, as much as possible, from the transparent shield electrodes 108 which do not contribute to display. That prevents deterioration of contrast.

In addition, a structure of the liquid crystal display device 21 shown in Fig. 4 can sufficiently prevent the deterioration of contrast. However, the light of the backlight irradiated from above the TFT array substrate 100 would be irradiated from the transparent shield electrodes 108 depending on an irradiating angle, thereby causing the deterioration of contrast. Further, the light from the backlight (not shown) may be irradiated from vicinities of end parts of the transparent shield electrodes 108 because of alignment unevenness of liquid crystal molecules in the vicinities of the end parts of the transparent shield electrodes 108, thereby causing the deterioration of contrast.

Therefore, it is considered that the counter substrate 200 also has light shields for shielding light formed, as with the TFT array substrate 100.

For example, Fig. 5 is a schematic cross-sectional view of a liquid crystal display device 31 showing an example in which light shields 211 are provided in the counter substrate 200 other than the TFT array substrate 100. Note that the liquid crystal display device 31 has a substantially identical structure with the liquid crystal display device 21 shown in Fig. 4, however, slightly differs in a structure of the counter substrate 200.

That is to say, as shown in Fig. 5, the counter substrate 200 has a structure in which the counter electrodes 202 partially overlap the transparent shield electrodes 108 of the TFT array substrate 100, and light shielding layers 211 are formed so as to cover extensional parts of the counter electrodes 202.

The light shielding layers 211 have openings 211a which are opening areas narrower than opening areas of openings 201a of color filter layers 201. It is preferable that the opening areas of the openings 211a of the light shielding layers 211 are as small as possible. However, it is necessary that external light is irradiated to photo sensor elements 107 of the TFT array substrate 100. Therefore, the opening areas should be large enough to allow the light to properly irradiate to the photo sensor elements 107.

The liquid crystal display device 31 of the structure prevents leak of light from both areas of the transparent shield electrodes 108 of the TFT array substrate 100 and vicinities of the openings 201a of the color filter layers 201 of the counter substrate 200. Therefore, deterioration of contrast is surely prevented to improve a display quality.

As described above, in the liquid crystal display devices 11, 21 and 31 of the structures, a driving system of the counter electrodes 202 of the counter substrate 200 is not particularly limited. However, for example in a case that the counter electrodes 202 are driven by AC, it is preferable that electric potentials of the transparent shield electrodes 108 on the TFT array substrate 100 are set at an intermediate values of electric potentials of the counter electrodes 202.

As described above, it is configured that the counter electrodes 202 of the counter substrate 200 are driven by AC and the electric potentials of the transparent shield electrodes 108 are set at the intermediate values of the electric potentials of the counter electrodes 202. For example, this configuration makes it possible that positive and negative polarities of electric fields to be applied on liquid crystals on the transparent electrodes are same in magnitude so that a stable display quality is obtained without causing flicker.

Further, when the counter electrodes 202 are driven by DC, it is preferable that the electric potentials of the transparent shield electrodes 108 are set at the same electric potentials as the counter electrodes 202. In the case, the transparent shield electrodes 108 may have the same electric potentials as the counter electrodes 202 by electrically connecting the transparent shield electrodes 108 to the counter electrodes 202.

As described above, when the counter electrodes 202 of the counter substrate 200 are driven by DC, the electric potentials of the transparent shield electrodes 108 are set at the same electric potentials as the counter electrodes 202. For example in a case of a liquid crystal display device of a normally black, this causes a direct current component not to be applied on liquid crystals on the transparent shield electrodes 108. Therefore, alignments of the liquid crystals on the transparent shield electrodes 108 go into a black display state, and a good display quality without deterioration of contrast is obtained.

Further, the direct current component will not be applied to the liquid crystals on the transparent shield electrodes 108. That avoids problems such as spots caused by an ionic impurity.

Each of the liquid crystal display devices 11, 21 and 31 as described above is a transparent liquid crystal display device. The present invention is also applicable to a semi-transparent liquid crystal display device, other than the transparent liquid crystal display devices.

For example, Fig. 6 is a schematic cross-sectional view in applying the present invention to a semi-transparent liquid crystal display device 41.

As shown in Fig. 6, in the liquid crystal display device 41, a basic structure of a TFT array substrate 100 is the same as that of the TFT array substrate 100 shown in Fig. 4 or Fig. 5. However, the device 41 differs in that a reflective electrode 131 is formed on a part of a pixel electrode 106, from that of Fig. 4 or Fig. 5. Further, a structure of a color filter layer 201 of a counter substrate 200 is identical to that of the liquid crystal display device 11 shown in Fig. 2. However, the device 41 differs in a structure of a counter electrode 202.

In the liquid crystal display device 41 shown in Fig. 6, a thickness of a liquid crystal layer 300 in a transparent area 106a is different from that in a reflective area 106b on a pixel electrode 106. Normally, the thickness of the liquid crystal layer 300 in the transparent area 106a is thicker than that in the reflective area 106b. Specifically, the thickness of the liquid crystal layer 300 in the transparent area 106a is set approximately twice as that in the reflective area 106b. A difference of the thickness of the liquid crystal layers 300 is made by a transparent resist 221. Further, the transparent resist 221 is also formed above a transparent shield electrode 108 so as to fill in an opening 201 a of the color filter layer 201 with the transparent resist 221.

By doing this, a step made in the color filter layer 201 is eliminated. This prevents leak of light which occurs in a step portion of the color filter layer 201, decrease in thickness and break of the counter electrode 200 at the step portion.

Further, a cell gap on the transparent shield electrode 108 is maintained at the same as the reflective area 106b. This enables display on the transparent shield electrode 108 to be controlled as in display on a reflective electrode 131.

As described above, each of the liquid crystal display devices 11, 21, 31 and 41 of the present embodiment includes a display panel in which photo sensor elements 107 which are light sensors are provided in pixels, has transparent shield electrodes 108 which cover the photo sensor elements 107 provided, and the transparent shield electrodes 108 are electrically insulated from pixel electrodes 106 in pixels.

According to the structure, the photo sensor elements 107 are covered with the transparent shield electrodes 108, and the transparent shield electrodes 108 are electrically insulated from the pixel electrodes 106. Therefore, the photo sensor elements 107 are not covered with the pixel electrodes 106,meanwhile the photo sensor elements 107 are shielded from electric noise caused by variation in electric potentials in the pixel electrodes 106. Thereby the electric noise caused by the pixel electrodes 106 will not affect the photo sensor elements 107. Accordingly, deterioration of sensitivity of the photo sensor elements 107 is preventable. As a result, the photo sensor elements 107 which are light sensors can be improved to have a greater sensitivity than a conventional light sensor built-in display panel.

Consequently, when each of the liquid crystal display devices 11, 21, 31 and 41 of the structures is applied to a light sensor touch panel built-in liquid crystal display device, the greater sensitivity of the light sensor provides a greater perception to a touch panel operation of a user, thereby causing an improvement in operability of the touch panel.

The present invention being thus described, it will be obvious that the same way may be varied in many ways. Such variations are not to be regarded as a departure from the spirit and scope of the invention, and all such modifications as would be obvious to one skilled in the art are intended to be included within the scope of the following claims.

### Industrial Applicability

The present invention is applicable to a display device including a light sensor in a pixel, particularly to a display device which requires an improvement of a sensitivity of a light sensor, such as a light sensor touch panel built-in liquid crystal display panel and a light sensor scanning function built-in liquid crystal display panel.

## Claims

1. An active matrix substrate (100) comprising:
a plurality of pixels, wherein each pixel comprises a pixel electrode (106) and a light sensor (107); and
transparent electrodes (108) which cover the light sensors (107),
the transparent electrodes (108) being electrically insulated from pixel electrodes (106) in pixels and being formed on a same layer as the pixel electrodes (106).

2. The active matrix substrate as set forth in claim 1, wherein adjacent transparent electrodes (108) which cover the individual light sensors (107) are electrically connected with each other.

3. The active matrix substrate as set forth in claim 2, wherein the transparent electrodes (108) have connecting portions (108a) the width of which is narrower than the width of the other portions (108b) of the transparent electrodes, and the width of the connecting portions is 10 µm or less.

4. The active matrix substrate as set forth in claim 1, comprising light shields (121) for shielding light in marginal parts of light-sensitive portions of the light sensors.

5. The active matrix substrate as set forth in claim 4, wherein the light shields (121) are provided on the transparent electrodes (108).

6. A display device comprising a display panel including an active matrix substrate according to one of claims 1 to 3.

7. The display device as set forth in claim 6, wherein the display device is adapted to apply a predetermined electric potential to the transparent electrodes (108).

8. The display device as set forth in claim 7, wherein the active matrix substrate (100) has the pixel electrodes (106) on one side and wherein the display device further comprises a counter substrate (200) that has the counter electrodes (202) on one side thereof, wherein the counter electrodes (202) face said one side of the active matrix substrate (100) on which the pixel electrodes (106) are provided, and
wherein the display device is adapted to apply electric potentials to the transparent electrodes which are set at the same value as those of the counter electrodes, when the counter electrodes of the counter substrate are driven by DC.

9. The display device as set forth in claim 6, comprising light shields (211) for shielding light in marginal parts of light-sensitive portions of the light sensors and a counter substrate (200), wherein the light shields (211) are provided on the counter substrate (200) that faces the active matrix substrate (100) on which the pixel electrodes (106) are formed.

10. The display device as set forth in claim 6 or 7, further comprising a counter substrate (200) that has counter electrodes (202) on one side thereof and that is facing the active matrix substrate (100) on which the pixel electrodes (106) are formed, wherein the counter electrodes (202) are formed on the counter substrate (202) in places other than places facing the transparent electrodes (108).

11. The display device according to any one of claims 8 to 10, wherein the counter electrodes (202) are formed on the counter substrate (202) in places other than places facing the transparent electrodes (108).

12. The display device according to claim 6, wherein the display device comprises a counter substrate (200), and wherein the display device is a semi-transparent display device including a transparent section (106a) and a reflecting section (106b) in each pixel, and in which device cell thickness is controlled by transparent resists (221) in the transparent section and the reflecting section on the counter substrate (200) facing the active matrix substrate (100), on which the pixel electrodes are formed, wherein the transparent resists (221) for the cell thickness control are provided respectively at positions corresponding to the transparent electrodes of the counter substrate.

13. The display device as set forth in claim 6, wherein the active matrix substrate (100) comprises light shields (121) for shielding light in marginal parts of light-sensitive portions of the light sensors.

14. The display device as set forth in claim 14, wherein the light shields (121) are provided on the transparent electrodes (108).

## Patentansprüche

1. Aktivmatrixsubstrat (100) mit:
einer Vielzahl von Pixeln, wobei jedes Pixel eine Pixelelektrode (106) und einen Lichtsensor (107) aufweist; und
transparenten Elektroden (108), die die Lichtsensoren (107) bedecken,
wobei die transparenten Elektroden (108) von den Pixelelektroden (106) in den Pixeln elektrisch isoliert sind und auf der gleichen Schicht wie die Pixelelektroden (106) ausgebildet sind.

2. Aktivmatrixsubstrat nach Anspruch 1, **dadurch gekennzeichnet, dass** benachbarte transparente Elektroden (108), die die einzelnen Lichtsensoren (107) bedecken, miteinander elektrisch verbunden sind.

3. Aktivmatrixsubstrat nach Anspruch 2, **dadurch gekennzeichnet, dass** die transparenten Elektroden (108) Verbindungsteile (108a) haben, deren Breite kleiner als die Breite der übrigen Teile (108b) der transparenten Elektroden ist und die Breite der Verbindungsteile 10 µm oder weniger beträgt.

4. Aktivmatrixsubstrat nach Anspruch 1, das Lichtabschirmungen (121) aufweist, um Randteile von lichtempfindlichen Teilen der Lichtsensoren gegen Licht abzuschirmen.

5. Aktivmatrixsubstrat nach Anspruch 4, **dadurch gekennzeichnet, dass** die Lichtabschirmungen (121) auf den transparenten Elektroden (108) vorgesehen sind.

6. Displayeinheit, die ein Display mit einem Aktivmatrixsubstrat nach einem der Ansprüche 1 bis 3 aufweist.

7. Displayeinheit nach Anspruch 6, **dadurch gekennzeichnet, dass** sie so eingerichtet ist, dass sie ein festgelegtes elektrisches Potential an die transparenten Elektroden (108) anlegt.

8. Displayeinheit nach Anspruch 7, **dadurch gekennzeichnet, dass**
das Aktivmatrixsubstrat (100) die Pixelelektroden (106) auf einer Seite hat,
die Displayeinheit weiterhin ein Gegensubstrat (200) aufweist, das Gegenelektroden (202) auf seiner einen Seite hat, wobei die Gegenelektroden (202) der einen Seite des Aktivmatrixsubstrats (100) gegenüberliegen, auf dem die Pixelelektroden (106) vorgesehen sind, und
die Displayeinheit so eingerichtet ist, dass sie elektrische Potentiale an die transparenten Elektroden anlegt, die auf den gleichen Wert wie die Gegenelektroden eingestellt werden, wenn die Gegenelektroden des Gegensubstrats mit einem Gleichstrom angesteuert werden.

9. Displayeinheit nach Anspruch 6, die Lichtabschirmungen (211) zum Abschirmen von Randteilen von lichtempfindlichen Teilen der Lichtsensoren gegen Licht sowie ein Gegensubstrat (200) aufweist, wobei die Lichtschutzschichten (211) auf dem Gegensubstrat (200) vorgesehen sind, das dem Aktivmatrixsubstrat (100) gegenüberliegt, auf dem die Pixelelektroden (106) ausgebildet sind.

10. Displayeinheit nach Anspruch 6 oder 7, die weiterhin ein Gegensubstrat (200) aufweist, das Gegenelektroden (202) auf seiner einen Seite hat und das dem Aktivmatrixsubstrat (100) gegenüberliegt, auf dem die Pixelelektroden (106) ausgebildet sind, wobei die Gegenelektroden (202) auf dem Gegensubstrat (202) an anderen Stellen als denen ausgebildet sind, die den transparenten Elektroden (108) gegenüberliegen.

11. Displayeinheit nach einem der Ansprüche 8 bis 10, **dadurch gekennzeichnet, dass** die Gegenelektroden (202) auf dem Gegensubstrat (200) an anderen Stellen als denen ausgebildet sind, die den transparenten Elektroden (108) gegenüberliegen.

12. Displayeinheit nach Anspruch 6, **dadurch gekennzeichnet, dass** die Displayeinheit ein Gegensubstrat (200) aufweist und eine semi-transparente Displayeinheit mit einem transparenten Teil (106a) und einem reflektierenden Teil (106b) in jedem Pixel ist, wobei die Zellendicke der Anordnung mittels transparenten Resists (221) in dem transparenten Teil und dem reflektierenden Teil auf dem Gegensubstrat (200) gesteuert wird, das dem Aktivmatrixsubstrat (100) gegenüberliegt, auf dem die Pixelelektroden ausgebildet sind, wobei die transparenten Resists (221) zum Steuern der Zellendicke jeweils an Positionen vorgesehen sind, die den transparenten Elektroden des Gegensubstrats entsprechen.

13. Displayeinheit nach Anspruch 6, **dadurch gekennzeichnet, dass** das Aktivmatrixsubstrat (100) Lichtabschirmungen (121) aufweist, um Randteile von lichtempfindlichen Teilen der Lichtsensoren gegen Licht abzuschirmen.

14. Displayeinheit nach Anspruch 14, **dadurch gekennzeichnet, dass** die Lichtabschirmungen (121) auf den transparenten Elektroden (108) vorgesehen sind.

## Revendications

1. Substrat à matrice active (100) comprenant :
une pluralité de pixels où chaque pixel comprend une électrode de pixel (106) et un capteur de lumière (107) ; et
des électrodes transparentes (108) qui couvrent les capteurs de lumière (107),
les électrodes transparentes (108) étant électriquement isolées des électrodes de pixels (106) en pixels et étant formées sur une même couche que les électrodes de pixels (106).

2. Substrat à matrice active tel que décrit dans la revendication 1, dans lequel des électrodes transparentes (108) adjacentes qui couvrent les capteurs de lumière individuels (107) sont électriquement connectées les unes aux autres.

3. Substrat à matrice active tel que décrit dans la revendication 2, dans lequel les électrodes transparentes (108) ont des parties de connexion (108a) dont la largeur est plus étroite que la largeur des autres parties (108b) des électrodes transparentes, et la largeur des parties de connexion est de 10 µm ou moins.

4. Substrat à matrice active tel que décrit dans la revendication 1, comprenant des pare-lumière (121) pour masquer la lumière dans des parties marginales de parties photosensibles des capteurs de lumière.

5. Substrat à matrice active tel que décrit dans la revendication 4, dans lequel les pare-lumière (121) sont pourvus sur les électrodes transparentes (108).

6. Dispositif d'affichage comprenant un écran d'affichage comprenant un substrat à matrice active selon l'une des revendications 1 à 3.

7. Dispositif d'affichage tel que décrit dans la revendication 6, dans lequel le dispositif d'affichage est conçu pour appliquer un potentiel électrique prédéterminé au niveau des électrodes transparentes (108).

8. Dispositif d'affichage tel que décrit dans la revendication 7, dans lequel le substrat à matrice active (100) a les électrodes de pixels (106) sur un côté et dans lequel le dispositif d'affichage comprend en outre un contre-substrat (200) qui possède les contre-électrodes (202) d'un côté de celui-ci, où les contre-électrodes (202) font face audit un côté du substrat à matrice active (100) sur lequel les électrodes de pixels (106) sont pourvues, et
où le dispositif d'affichage est conçu pour appliquer des potentiels électriques aux électrodes transparentes qui sont définis à la même valeur que ceux des contre-électrodes lorsque les contre-électrodes du contre-substrat sont alimentées par un courant continu.

9. Dispositif d'affichage tel que décrit dans la revendication 6, comprenant des pare-lumière (211) pour masquer la lumière dans des parties marginales de parties photosensibles des capteurs de lumière et un contre-substrat (200), où les pare-lumière (211) sont pourvus sur le contre-substrat (200) qui fait face au substrat à matrice active (100) sur lequel les électrodes de pixels (106) sont formées.

10. Dispositif d'affichage tel que décrit dans les revendications 6 ou 7, comprenant en outre un contre-substrat (200) qui possède des contre-électrodes (202) d'un côté de celui-ci, et qui fait face au substrat à matrice active (100) sur lequel les électrodes de pixels (106) sont formées, où les contre-électrodes (202) sont formées sur le contre-substrat (202) à des emplacements autres que des emplacements faisant face aux électrodes transparentes (108).

11. Dispositif d'affichage selon l'une quelconque des revendications 8 à 10, dans lequel les contre-électrodes (202) sont formées sur le contre-substrat (202) à des emplacements autres que des emplacements faisant face à des électrodes transparentes (108).

12. Dispositif d'affichage selon la revendication 6, dans lequel le dispositif d'affichage comprend un contre-substrat (200), et où le dispositif d'affichage est un dispositif d'affichage semi-transparent comprenant une section transparente (106a) et une section réfléchissante (106b) dans chaque pixel, et où l'épaisseur de cellule du dispositif est contrôlée par des réserves transparentes (221) dans la section transparente et la section réfléchissante sur le contre-substrat (200) faisant face au substrat à matrice active (100) sur lequel les électrodes de pixels sont formées, où les réserves transparentes (221) pour le contrôle de l'épaisseur de cellule sont pourvues respectivement à des positions correspondant aux électrodes transparentes du contre-substrat.

13. Dispositif d'affichage tel que décrit dans la revendication 6, dans lequel le substrat à matrice active (100) comprend des pare-lumière (121) pour masquer la lumière dans des parties marginales de parties photosensibles des capteurs de lumière.

14. Dispositif d'affichage tel que décrit dans la revendication 14, dans lequel les pare-lumière (121) sont pourvues sur les électrodes transparentes (108).
